# EUROPEAN PATENT SPECIFICATION

(11) **EP 3 282 855 B1**
(45) Date of publication and mention of the grant of the patent: **31.07.2019**
(21) Application number: 16720338.9
(22) Date of filing: 12.04.2016
(51) Int. Cl.: A22C 17/00, A22C 25/18

(54) **MACHINE FOR SLICING FISH FILLETS, IN PARTICULAR SALMON FILLETS**
VORRICHTUNG ZUM ZERLEGEN VON FISCHSEITEN, INSBESONDERE VON LACHSSEITEN
MACHINE POUR TRANCHER DES FILETS DE POISSON, PARTICULIÈREMENT DES FILETS DE SAUMON

(30) Priority: 13.04.2015 DK 201500227
(43) Date of publication of application: 21.02.2018
(73) Proprietor: Uni-Food Technic A/S, 9280 Storvorde (DK)
(72) Inventor: JENSEN, Bjarne Normann, 9220 Aalborg Ø (DK)
(74) Representative: Larsen & Birkeholm A/S
(86) International application number: PCT/DK2016/000013
(87) International publication number: WO 2016/165715

(56) References cited:
- WO-A1-00/05968
- WO-A1-2010/088913
- DE-A1- 4 215 951
- NL-C- 47 847
- US-A- 5 094 650

## Description

### Technical field of the invention

The present invention relates to a machine for slicing fish fillets, in particular salmon fillets.

### Background of the invention

The present invention relates to a machine for slicing fish fillets, in particular salmon fillets. The machine is, more specifically, of the kind described in the beginning of claim 1.

Known filleting machines of the kind described are usually constructed with a flat cutting table consisting of at least two belt conveyors placed with their conveyor tracks at the same horizontal level. Between the two belt conveyors is inserted a cutting device, which with knives designed to make cuts perpendicular on the belt conveyor's feed direction, cuts through the fish fillets that are placed on the cutting table and which by means of the belt conveyors are fed through the cutting zone of the machine. The transverse cuts are made in a pre-set diagonal angle in relation to horizontal, allowing the fish fillet to be cut into a number of relatively thin slices, which are wider than corresponding to the thickness of the fish fillet. The transverse cuts are made successively with the feed of the fillet through the machine so that the relation between the feed rate of the belt conveyor and the cut frequency of the cutting device will determine the thickness of the fillet slices produced.

Filleting machines of this kind, also known as fillet slicers, are available in many different designs. The machines are especially applied for slicing of salmon and halibut fillets but are of course also applicable for slicing of other meat and cold cuts products. A general problem with the known machines is low operating speed (cut frequency), poor cut quality and an undesired variation in the thickness of the slices. Moreover, the machines are often constructed with a technically complex cutting device, which makes the daily cleaning of the machine laborious and time-consuming. Accessibility to the vital working parts of the machine in connection with continuous maintenance and cleaning of the machine is often insufficient and ill-considered.

An example of a known filleting machine of the above mentioned kind is the Danish utility model DK 2012 00081 U3. The machine described in the utility model specifications is such an example of a machine with a technically complex cutting device, with an angle adjustment mechanism that is practically inaccessibly placed under the machines' cutting table and with cutting parts that are constructed somewhat unstable resulting in poor cut quality. The daily cleaning of the machine is difficult to carry out because of the inaccessible placement of the angle adjustment mechanism. WO2010088913 discloses a slicer apparatus of the type used for slicing fish fillets, where the apparatus comprises a conveying path, and cutting means arranged in said conveying path. The cutting means comprises a set of moveable reciprocating knives and a cutting land, where the cutting means further comprises means for moving the knives relative to the cutting land and the surface of the conveyor path. The cutting means are arranged on a common member, which member may be rotated through a predetermined arch about a horizontal axis, perpendicular to the conveyor path's transport direction. WO0005968A1, US5094650A1 and DE4215951A1 also disclose machines for slicing food products.

The objective of the present invention is to remedy the above-mentioned shortcomings and inconveniences in known filleting machines. More specifically, the objective is to further develop the kind of filleting machine described here in such a way that the machine can operate at a higher operating frequency, i.e. with higher performance than has previously been possible, that the weaknesses of the knife guidance are eliminated, and that the machine in general will obtain an improved accessibility so that the daily cleaning and maintenance of the machine is facilitated.

### Summary of the invention

The objective of the present invention is to remedy the above-mentioned shortcomings and inconveniences in known filleting machines. More specifically, the objective is to further develop the kind of filleting machine described here in such a way that the machine can operate at a higher operating frequency, i.e. with higher performance than has previously been possible, that the weaknesses of the knife guidance are eliminated, and that the machine in general will obtain an improved accessibility so that the daily cleaning and maintenance of the machine is facilitated.

The solution according to the invention is a filleting machine according to claim 1, which in a known manner comprises a primarily horizontal conveyor track and, designed to connect with the conveyor track, a cutting device, which primarily consists of a cutting part consisting of a set of lengthwise movable, reversed reciprocating knives and a for these knives in the conveyor track integrated cutting dolly. The cutting part is placed perpendicular on the conveyor track and comprises means partly to move the knives in the longitudinal reversed reciprocating motion relative to each other, and partly to move both knives down towards and away from the cutting dolly while completing a cut into the fish fillet.

The cutting device is structured with an above the conveyor track placed angle adjustable supporting frame practically bridging the conveyor track and that on each side of this supporting frame is mounted a linear guide, which serves to control the knives in their motion down towards and away from the cutting dolly. The double-sided guidance of the knives ensures a stable and accurate guidance of the knives and thus an accurate cutting motion down towards and away from the cutting dolly. The accurate cutting motion is essential to the machine's ability to achieve the best possible cut quality with clean cuts of high cut frequency and, at the same time, with a uniform slice thickness as a result.

The structure of the machine with the cutting device in general designed as a bridge across the machine's conveyor track and with guides and cutting parts mounted easily accessible in direct connection to the sides of this bridge means that the daily cleaning of the machine can be carried out swift and efficiently and that the continuous maintenance of the parts of the machine which require special inspection, i.e. especially the cutting parts with the two reversed reciprocating knives, and the angle adjustment mechanism of the support frame can equally be carried out swift and efficiently.

For the motion of the knives down towards and away from the cutting dolly is inserted a separate drive unit in each side of the supporting frame, and these two drive units are synchronised with each other for parallel guidance of the knives up and down. The drive units could advantageously be of the kind that consists of an electromagnetic linear motor based on an electromagnetic cylinder. To achieve a compact structure with the best possible machine stability as well as the best possible accessibility in relation to cleaning and maintenance, each drive unit are made of an electromagnetic linear motor and a linear guide. These two components are integrated into a compact assembled unit that as one single machine unit is mounted directly on the supporting frame. Electromagnetic linear drive units of the kind in question are marketed today as prefabricated standard components. The drive units are characterised by their ability to operate at a very high motion speed and with high repeatability accuracy, which in turn allows for the cutting motion of the machine to be completed and repeated at high frequency. The solution means that the filleting machine can operate at a substantially higher cut frequency than previously known in slicers of this kind, and thus with a considerably higher production capacity than has previously been possible.

A simple and functional solution to the problem of adjusting the machine's cutting dolly to the cutting angle to which the machine's cutting dolly is currently set may be when the cutting dolly is simply designed as a replaceable unit with the cutting angle adjusted for the required setting. If the cutting angle is changed, which is achieved by angular adjustment of the entire cutting device relative to the horizontal cutting table, the cutting dolly is replaced at the same time in order to maintain a suitable match between the cutting angle of the cutting device and the cutting angle of the cutting dolly. Appropriately, the cutting dolly is inserted in the gap between two belt conveyor sections in the conveyor track and, at the same time, levelled with these so that the belt conveyor sections and the cutting dolly combined form an almost flat, continuous conveyor track for the fish fillet through the cutting zone of the machine. Thereby ensuring that the fish fillet pass through the machine's cutting zone in a in a smooth, continuous motion which is essential to obtaining slices of uniform thickness.

It should be noted that the structure of the machine with the cutting device structured as an angle adjustable bridge placed across the conveyor track makes it possible to design the cutting device so that the angle interval in which the cutting device can be adjusted becomes significant. It is, for example, possible to adjust the cutting device for vertical cut so that the machine, besides normal filleting, can also be used for cutting the fish into portion sizes.

In a preferred embodiment, the machine's reciprocating knives comprise two parallel mounted reversed knives that are removably inserted into holders, which are controlled in linear guides made for that purpose. The holders are driven by a joint driving device designed for generating the reversed reciprocating, back and forth motions of the knives. The knives, the knife holders, the linear guides and the joint driving device is mounted in connection to the two in the sides of the supporting frame mounted linear drive units for guiding of the knives in a parallel guide motion down towards and away from the cutting dolly during the operating process of the machine.

The joint driving device can according to the invention advantageously consist of an electromotor equipped with connecting rod and eccentric drive. The connection between this drive and the knives consists of joint rods. The construction is mechanically simple and sturdy and able to operate at a high frequency. Alternatively, the driving device can consist of a separate electromagnetic cylinder directly connected to each knife. The two cylinders are mutually synchronized by a suitable electronic control of the cylinders allowing the knives to have the desired reversed reciprocating motion. The solution is constructively simple, easy to clean and allows for an extremely high operation frequency for the knives.

In another embodiment, the machine comprises means for continuous registration of the thickness of the fish fillet and for continuous calculation of an optimal cutting angle in relation to the registered fillet thickness. By other means it is possible to complete an automatic angle adjustment of the supporting frame based on the calculated optimal cutting angle so that the cutting angle can be continuously adjusted and adapted to the variations of the product which is being cut. Although the automatic angle adjustment is limited to an angle interval determined by the cutting dolly with which the machine is currently mounted, it does, however, allow for a certain optimisation of the filleting so that slices of a desired uniform size can be produced. The angle adjustment of the supporting frame is automatic and continuous via a specially designed adjustment motor.

The invention is explained in more detail below in connection with the drawings.

### Brief description of the figures

Figure 1 shows a filleting machine in a preferred embodiment according to the invention, shown from the side in a schematic illustration;

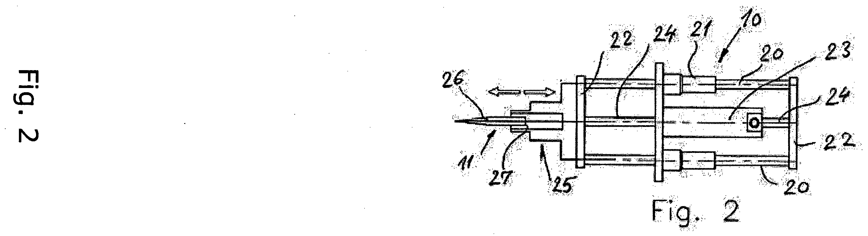

Figure 2 a linear guide and drive unit with integrated electromagnetic cylinder, shown in side view;

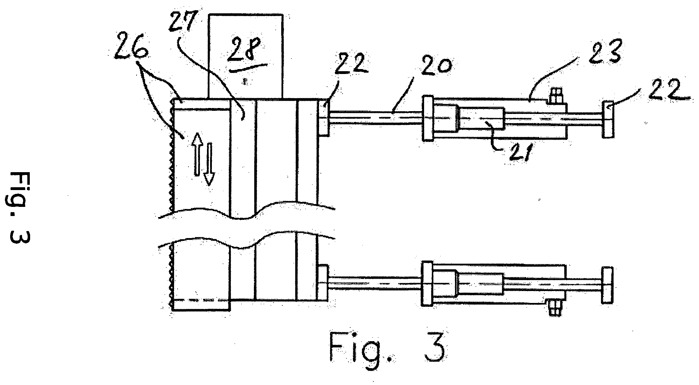

Figure 3 the machine's cutting device comprising two linear guide and drive units and a knife mechanism inserted between said units, shown separately and from above;
Figure 4 an enlarged section marked 'A' in figure 1 where the filleting machine's knife frame and associated knife guide unit is shown in detail;
Figure 5 same section as shown in figure 4, here with part of the frame removed to visualise the machine's replaceable cutting dolly;
Figure 6 the knife frame shown separately, seen from the side; and
Figure 7 shows a filleting machine from above, shown in full width associated guide and drive units with electromagnetic cylinders and with the reciprocating knives inserted between the two guide and drive units.

### Detailed description of the invention

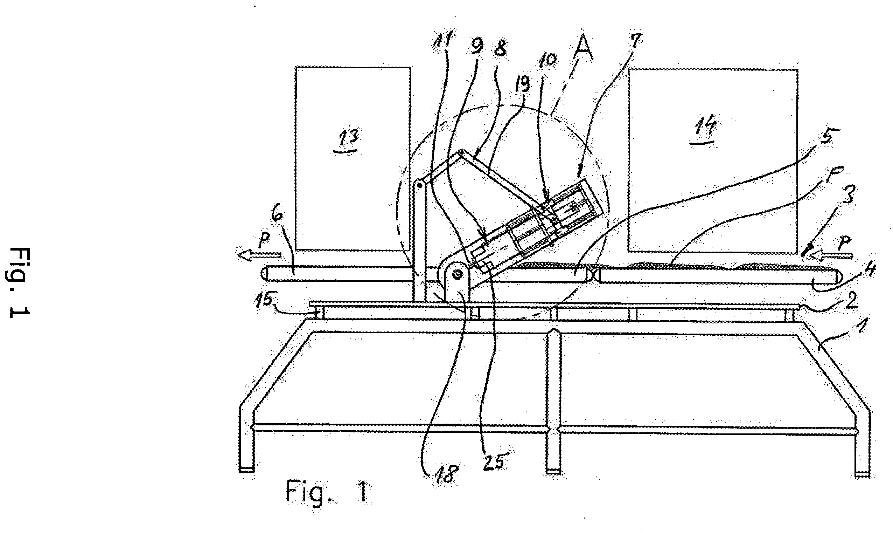

In the embodiment pictured in the drawing the filleting machine consists primarily of a frame-shaped housing 1, a horizontal, flat clamping plate 2, a conveyor track 3 composed of three conveyor band sections 4, 5 and 6 placed end to end and levelled horizontally, a bridge-shaped supporting frame 7 with an angle adjustment mechanism 8 mounted over the conveyor track 3, a cutting device 9 consisting of two guide units 10 and a set of reversed movable, reciprocating knives 11, a replaceable cutting dolly 12 inserted into the conveyor track 3, and two control cabinets 13 and 14 mounted over the housing 1 off-set to the conveyor track 3. The fish fillets that are to be filleted in the machine are placed manually on the first belt conveyor section 4. The fish fillets are indicated with F in figure 1, and the feed direction through the machine is indicated with arrows P.

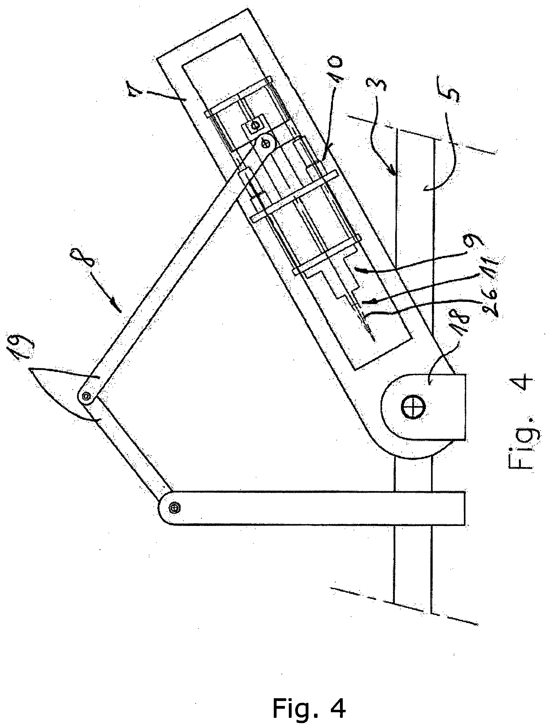

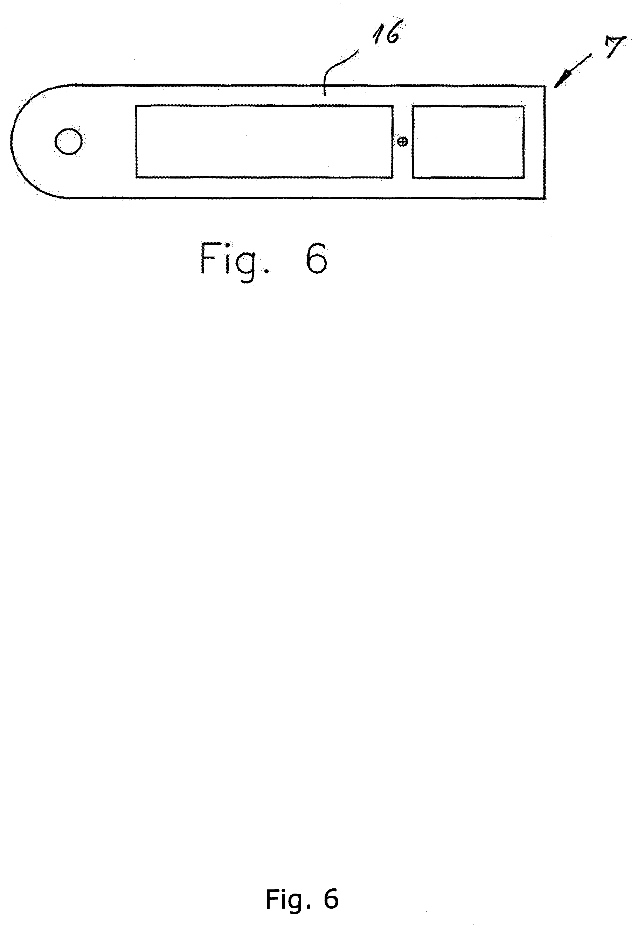

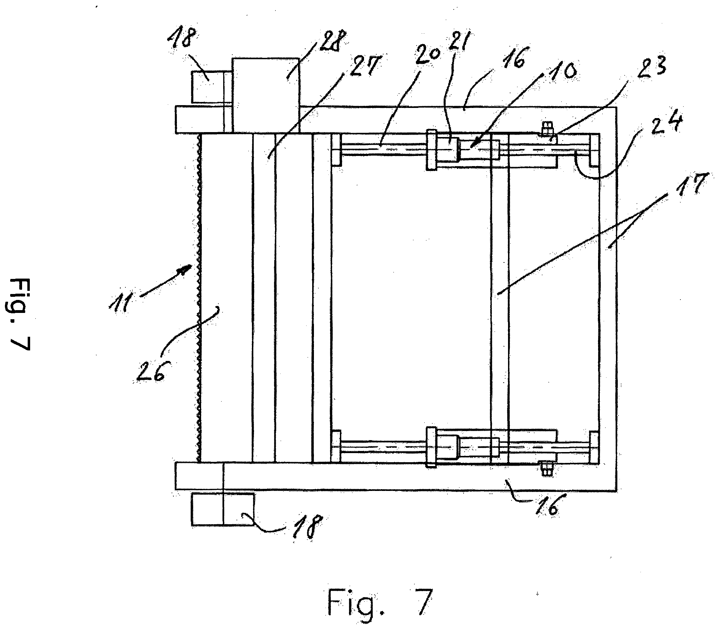

The clamping plate 2 is mounted at a distance above the housing 1 using a number of spacers 15, and carries partly the supporting frame 7 with associated angle adjustment mechanism 8, and partly the three belt conveyor sections 4, 5 and 6. The bridge-shaped supporting frame 7 is assembled by two rectangular frame-shaped sides 16 and a number of traversers 17 inserted across between said sides, see figures 6 and 7. The supporting frame is pivoted in two bearing brackets 18 mounted on the clamping plate 2 on each side of the conveyor track 3, and is driven by a joint rod mechanism 19 with associated motor pinion. The joint rod mechanism 19 and the motor pinion comprise the angle adjustment mechanism 8. The motor pinion is not showed in the drawing. With the angle adjustment mechanism 8 it is possible to change the supporting frame's 7 angular position in relation to the horizontal level of the conveyor track, see figure 4.

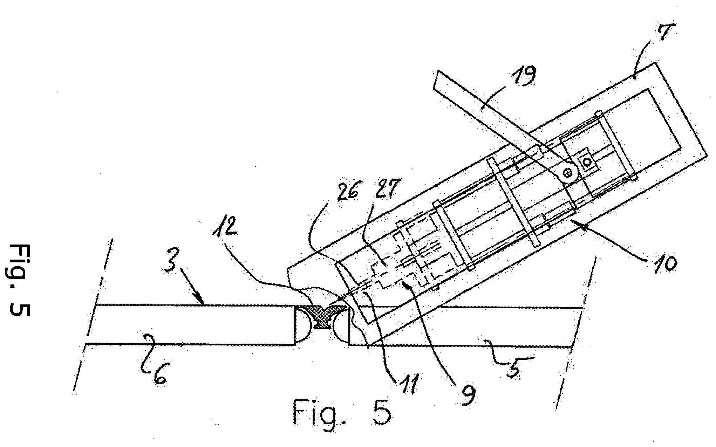

The filleting machine comprises, as specified in the above, a cutting device 9 composed of the two guide units 10 and a set of reversed movable, reciprocating knives 11. For the cutting device is included the replaceable cutting dolly 12, which is inserted into the conveyor track 3, see figure 5. The cutting dolly 12 is made of plastic or hard rubber so that the knives are not damaged if they hit the dolly. The cutting dolly is shaped as a moulding, inserted into a corresponding T-not adaptor integrated into the conveyor track 3 in a narrow space between the second and third belt conveyor section 5 and 6, respectively, see figure 5.

The two guide units 10 are mounted on the inside of the supporting frame's 7 two rectangular frame-shaped sides 16, see figure 7. Each guide unit 10 consists of a set of hardened parallel guide shafts 20, which are embedded in ball-bearing guide bushes 21 and connected through a traverser 22 in each end of the guide shafts. Between the two guide shafts is inserted an electromagnetic cylinder 23, linked to the traversers 22 via a through-going piston rod 24. On one traverser 22 is mounted a knife mechanism 25, which primarily consists of two closely spaced oblong knives 26, inserted in the respective knife holder 27. The two knife holders are driven by a knife drive 28, which by means of an electromotor and associated piston rod mechanisms (not shown) is designed to drive the two knife blades 26 with fast reciprocating motions back and forth opposite to each other during the cutting of the fish fillet F. The cutting of the fish fillet is carried out simultaneously with the two guide units 10 sliding the set of knives down towards the cutting dolly 12, see figure 5.

The size (length) of the filet slices produced depends on the thickness of the fish fillet and the supporting frame's angle adjustment. By continuously adjusting the frame angle according to the thickness of the fillet, the slices can be cut into suitable uniform sizes. For this task is used equipment for continuous measurement of the fish fillets that are fed into the machine on the first or second belt conveyor section 4 or 5, and for automatically adjustment of the frame angle in relation hereto. The measurement equipment is not shown in the drawing and the adjustment principle and associated equipment will not be explained in detail here.

Other material combinations, other detailed designs, and other constructive solutions for individual components of the machine and accessories are possible within the context of this invention, as are the application of the machine for other products than just fish fillets. For example, as a cold-cut slicer for rolled seasoned meat, salami, etc.

## Claims

1. Machine for slicing of fish fillets (F), in particular salmon fillets, wherein the machine comprises a primarily horizontal conveyor track (3) and, designed to connect with the conveyor track, a cutting device, (9), which primarily consists of a cutting part (25) consisting of a pair of lengthwise movable, reversed reciprocating knives (11) and a for these knives in the conveyor track integrated cutting dolly (12), which cutting part (25) is placed perpendicular on the conveyor track (3), and wherein the cutting device (9) further comprises means (27, 28) partly for moving the knives (11) in the longitudinal reciprocating motion relative to each other, and partly for moving both knives down towards and away from the cutting dolly (12) while completing the cut into the fish fillet (F), wherein the cutting device (9) is integrated in an above the conveyor track (3) placed angle adjustable supporting frame (7), bridging the conveyor track, and wherein on each side of this supporting frame (7) is mounted a linear guide unit (10), which serves to control the knives (11) in their motion down towards and away from the cutting dolly (12); for movement of the knives (11) down towards and away from the cutting dolly (12) is inserted a separate drive unit (23) on each side of the supporting frame (7), and that these two drive units (23) are mutually synchronised for parallel guidance of the knives down towards and away from the cutting dolly;
**characterized in that** each guide and drive unit (10) is composed of an electromagnetic linear motor (23, 24) and a linear guide (20, 21, 22), and that these components are integrated into a compact assembled unit which as a single machine component is built into the supporting frame (7).

2. Machine according to claim 1, **characterized in that** the electromagnetic linear motor (23) is of the kind that is based on an electromagnetic force driven cylinder (23, 24), and that the two cylinders are electronically synchronised.

3. Machine according to any one of the claims 1-2, **characterized in that** the cutting dolly (12) is constructed as a replaceable unit and that the cutting dolly's adjustment for different angle adjustment of the supporting frame (7) is achieved by replacing the cutting dolly, for which purpose each slicing machine is equipped with a selection of cutting dollies designed for different cutting angles.

4. Machine according to claim 3, **characterized in that** the cutting dolly (12) is inserted between two belt conveyors (5, 6) in the conveyor track and is levelled with these so that the belt conveyor sections and the cutting dolly combined form an almost flat, continuous conveyor track (3) for the fish fillet (F) through the cutting zone of the machine.

5. Machine according to any one of the claims 1-4, **characterized in that** the reciprocating set of knives (11) comprises two parallel mounted reversed knives (26), that are removably inserted into the knife holders (27), which are controlled in linear guides made for that purpose, and which are driven by a joint driving device (28) designed for generating reversed reciprocating, back and forth motion of the knife holders (27), which knives, knife holders, linear guides and joint driving device is mounted in connection to the two in the frame (7) mounted linear guide and drive units (10) for guiding of the knives (11) down towards and away from the cutting dolly (12) during the operation process of the machine.

6. Machine according to claim 5, **characterized in that** the joint driving device (28) comprises an electromotor equipped with connecting rod and eccentric drive, and that the connection between said electromotor and the knives (26) consists of joint rods or similar connecting parts.

7. Machine according to claim 5, **characterized in that** the driving device (28) for the two reversed reciprocating knives (26) consists of a, to each knife connected, separate electromagnetic cylinder, and that the two cylinders are electronically synchronised for generating the reversed back and forth motions of the knives.

8. Machine according to any one of the claims 1-7, **characterized in that** it comprises means for continuous registration of the thickness of the fish fillet (F) and for continuous calculation of an optimal cutting angle in relation to the registered fillet thickness, and by comprising other means for automatic angle adjustment of the supporting frame (7) in relation to the calculated optimal cutting angle, which automatic angle adjustment is limited to an angle interval determined by the cutting dolly (12) with which the machine is currently mounted.

## Patentansprüche

1. Vorrichtung zum Zerlegen von Fischseiten (F), insbesondere von Lachsseiten, wobei die Vorrichtung eine vorrangig horizontale Förderbahn (3) umfasst und konzipiert ist, um mit der Förderbahn eine Schneidvorrichtung (9) zu verbinden, die vorrangig aus einem Schneidteil (25) besteht, das aus einem Paar von längs beweglichen, umgekehrten sich hin- und herbewegenden Messern (11) und einem für diese Messer in der Förderbahn integrierten Schneidwagen (12) besteht, wobei das Schneidteil (25) senkrecht auf der Förderbahn (3) platziert ist, und wobei die Schneidvorrichtung (9) ferner Mittel (27, 28) umfasst, um teilweise die Messer (11) in der Hin- und Herbewegung in Längsrichtung in Bezug aufeinander zu bewegen und um teilweise beide Messer nach unten zu und weg von dem Schneidwagen (12) zu bewegen, während der Schnitt in die Fischseite (F) abgeschlossen wird, wobei die Schneidvorrichtung (9) in einem über der Förderbahn (3) platzierten winkelverstellbaren Stützrahmen (7) integriert ist, der die Förderbahn überbrückt, und wobei auf jeder Seite dieses Stützrahmens (7) eine lineare Führungseinheit (10) montiert ist, die dazu dient, die Messer (11) bei ihrer Bewegung nach unten zu und weg von dem Schneidwagen (12) zu steuern; für die Bewegung der Messer (11) nach unten zu und weg von dem Schneidwagen (12) ist eine separate Antriebseinheit (23) auf jeder Seite des Stützrahmens (7) eingesetzt, und damit diese zwei Antriebseinheiten (23) für eine parallele Führung der Messer nach unten zu und weg von dem Schneidwagen gegenseitig synchronisiert sind;
**dadurch gekennzeichnet, dass** jede Führungs- und Antriebseinheit (10) aus einem elektromagnetischen Linearmotor (23, 24) und einer linearen Führung (20, 21, 22) besteht, und dass diese Komponenten in eine kompakte zusammengesetzte Einheit integriert sind, die als eine einzelne Vorrichtungskomponente in den Stützrahmen (7) eingebaut ist.

2. Vorrichtung nach Anspruch 1, **dadurch gekennzeichnet, dass** der elektromagnetische Linearmotor (23) zu der Art gehört, die auf einem durch eine elektromagnetische Kraft angetriebenen Zylinder (23, 24) basiert, und dass die zwei Zylinder elektronisch synchronisiert sind.

3. Vorrichtung nach einem der Ansprüche 1-2, **dadurch gekennzeichnet, dass** der Schneidwagen (12) als eine austauschbare Einheit konstruiert ist und dass die Verstellung des Schneidwagens für eine unterschiedliche Winkelverstellung des Stützrahmens (7) durch das Austauschen des Schneidwagens erreicht wird, wobei zu diesem Zweck jede Zerlegungsvorrichtung mit einer Auswahl von Schneidwagen ausgestattet ist, die für unterschiedliche Schneidwinkel konzipiert sind.

4. Vorrichtung nach Anspruch 3, **dadurch gekennzeichnet, dass** der Schneidwagen (12) zwischen zwei Bandförderern (5, 6) in der Förderbahn eingesetzt und mit diesen ausgerichtet ist, sodass die Bandfördererabschnitte und der Schneidwagen in Kombination durch die Schneidzone der Vorrichtung eine nahezu flache, kontinuierliche Förderbahn (3) für die Fischseite (F) bilden.

5. Vorrichtung nach einem der Ansprüche 1-4, **dadurch gekennzeichnet, dass** der sich hin- und herbewegende Satz von Messern (11) zwei parallel montierte umgekehrte Messer (26) umfasst, die abnehmbar in die Messerhalter (27) eingesetzt sind, welche in linearen Führungen gesteuert werden, die zu diesem Zweck hergestellt werden, und welche von einer gemeinsamen Antriebseinrichtung (28) angetrieben werden, die konzipiert ist, um eine umgekehrte hin- und hergehende Rückwärts- und Vorwärtsbewegung der Messerhalter (27) zu erzeugen, wobei die Messer, die Messerhalter, die linearen Führungen und die gemeinsame Antriebseinrichtung in Verbindung mit den beiden in dem Rahmen (7) montierten linearen Führungs- und Antriebseinheiten (10) zum Führen der Messer (11) nach unten zu und weg von dem Schneidwagen (12) während des Betriebsvorgangs der Vorrichtung montiert sind.

6. Vorrichtung nach Anspruch 5, **dadurch gekennzeichnet, dass** die gemeinsame Antriebseinrichtung (28) einen Elektromotor umfasst, der mit einer Verbindungsstange und einem Exzenterantrieb ausgestattet ist, und dass die Verbindung zwischen dem Elektromotor und den Messern (26) aus Gelenkstangen oder ähnlichen Verbindungsteilen besteht.

7. Vorrichtung nach Anspruch 5, **dadurch gekennzeichnet, dass** die Antriebseinrichtung (28) für die zwei umgekehrten sich hin- und herbewegenden Messer (26) aus einem mit jedem Messer verbundenen separaten elektromagnetischen Zylinder besteht, und dass die zwei Zylinder elektronisch synchronisiert sind, um die umgekehrten Rückwärts- und Vorwärtsbewegungen der Messer zu erzeugen.

8. Vorrichtung nach einem der Ansprüche 1-7, **dadurch gekennzeichnet, dass** sie Mittel zur kontinuierlichen Registrierung der Dicke der Fischseite (F) und zur kontinuierlichen Berechnung eines optimalen Schneidwinkels in Bezug auf die registrierte Seitendicke umfasst, und durch das Umfassen anderer Mittel zur automatischen Winkelverstellung des Stützrahmens (7) in Bezug auf den berechneten optimalen Schneidwinkel, wobei die automatische Winkelverstellung auf ein Winkelintervall beschränkt ist, das durch den Schneidwagen (12) bestimmt wird, mit dem die Vorrichtung derzeit montiert ist.

## Revendications

1. Machine à trancher des filets de poisson (F), en particulier des filets de saumon, dans laquelle la machine comprend une piste de transport principalement horizontale (3) et un dispositif de coupe (9) conçu pour être relié à la piste de transport, qui est principalement constitué d'une pièce de coupe (25) constituée d'une paire de couteaux à mouvement alternatif en sens inverse mobiles longitudinalement (11) et d'un chariot de coupe (12) intégré dans la piste de transport pour ces couteaux, ladite pièce de coupe (25) étant placée perpendiculairement sur la piste de transport (3), et dans laquelle le dispositif de coupe (9) comprend en outre des moyens (27, 28) destinés en partie à déplacer les couteaux (11) dans le mouvement alternatif longitudinal l'un par rapport à l'autre, et en partie à faire descendre les deux couteaux pour les approcher du chariot de coupe (12) et les en éloigner tout en réalisant la découpe pour obtenir le filet de poisson (F), dans laquelle le dispositif de coupe (9) est intégré dans un bâti de support à inclinaison réglable (7) placé au-dessus de la piste de transport (3) et enjambant la piste de transport, et dans laquelle de part et d'autre de ce bâti de support (7) est montée une unité de guidage linéaire (10), qui sert à commander les couteaux (11) dans leur mouvement de descente pour s'approcher du chariot de coupe (12) et s'en éloigner ; pour la descente des couteaux (11) pour s'approcher du chariot de coupe (12) et s'en éloigner, une unité d'entraînement séparée (23) est insérée de part et d'autre du bâti de support (7), et ces deux unités d'entraînement (23) sont synchronisées mutuellement pour un guidage parallèle des couteaux en descente pour s'approcher du chariot de coupe et s'en éloigner ;
**caractérisée en ce que** chaque unité de guidage et d'entraînement (10) est composée d'un moteur linéaire électromagnétique (23, 24) et d'un guide linéaire (20, 21, 22), et **en ce que** ces composants sont intégrés pour former une unité assemblée de faible encombrement qui est encastrée en tant que composant simple de la machine dans le bâti de support (7).

2. Machine selon la revendication 1, **caractérisée en ce que** le moteur linéaire électromagnétique (23) est du type qui repose sur un cylindre entraîné par une force électromagnétique (23, 24), et **en ce que** les deux cylindres sont synchronisés électroniquement.

3. Machine selon l'une quelconque des revendications 1 et 2, **caractérisée en ce que** le chariot de coupe (12) est construit en tant qu'unité remplaçable et **en ce que** le réglage du chariot de coupe pour un réglage du bâti de support (7) selon différentes inclinaisons s'effectue en remplaçant le chariot de coupe, chaque machine à trancher étant équipée pour ce faire d'une sélection de chariots de coupe conçus pour différents angles de coupe.

4. Machine selon la revendication 3, **caractérisée en ce que** le chariot de coupe (12) est inséré entre deux transporteurs à courroie (5, 6) sur la piste de transport et est mis à niveau avec ceux-ci de sorte que les tronçons des transporteurs à courroie et le chariot de coupe forment ensemble une piste de transport continue quasiment plate (3) pour acheminer le filet de poisson (F) à travers la zone de coupe de la machine.

5. Machine selon l'une quelconque des revendications 1 à 4, **caractérisée en ce que** l'ensemble de couteaux à mouvement alternatif (11) comprend deux couteaux inversés montés parallèles (26), qui sont insérés de façon amovible dans les porte-couteaux (27), qui sont commandés dans des guides linéaires fabriqués dans ce but, et qui sont entraînés par un dispositif d'entraînement à articulation (28) conçu pour produire un mouvement alternatif en sens inverse de va-et-vient des porte-couteaux (27), lesdites couteaux, porte-couteaux, guides linéaires et dispositif d'entraînement à articulation étant montés en liaison avec les deux unités de guidage et d'entraînement linéaires (10) montées dans le bâti (7) pour le guidage des couteaux (11) en descente pour s'approcher du chariot de coupe (12) et s'en éloigner lors du fonctionnement de la machine.

6. Machine selon la revendication 5, **caractérisée en ce que** le dispositif d'entraînement à articulation (28) comprend un moteur électrique équipé d'une bielle et d'une commande excentrique, et **en ce que** la liaison entre ledit moteur électrique et les couteaux (26) est constituée de bielles articulées ou de pièces de liaison similaires.

7. Machine selon la revendication 5, **caractérisée en ce que** le dispositif d'entraînement (28) des deux couteaux à mouvement alternatif en sens inverse (26) est constitué d'un cylindre électromagnétique séparé relié à chaque couteau, et **en ce que** les deux cylindres sont synchronisés électroniquement pour produire les mouvements de va-et-vient en sens inverse des couteaux.

8. Machine selon l'une quelconque des revendications 1 à 7, **caractérisée en ce qu'**elle comprend des moyens pour un enregistrement continu de l'épaisseur du filet de poisson (F) et pour un calcul continu d'un angle de coupe optimal par rapport à l'épaisseur de filet enregistrée, et **en ce qu'**elle comprend d'autres moyens pour un réglage automatique d'inclinaison du bâti de support (7) par rapport à l'angle de coupe optimal calculé, ledit réglage automatique d'inclinaison étant limité à un intervalle angulaire déterminé par le chariot de coupe (12) avec lequel la machine est actuellement montée.
